Europäisches Patentamt

European Patent Office

Office européen des brevets

(11) Numéro de publication : **0 056 117**
**B1**

(19)

(12) **FASCICULE DE BREVET EUROPÉEN**

(45) Date de publication du fascicule du brevet :
13.06.84

(21) Numéro de dépôt : **81110304.3**

(22) Date de dépôt : **10.12.81**

(51) Int. Cl.³ : **C 02 F   1/52,** B 01 D 37/02,
B 01 D 17/02

(54) **Procédé de traitement d'un liquide.**

(30) Priorité : **09.01.81 FR 8100286**

(43) Date de publication de la demande :
**21.07.82 Bulletin 82/29**

(45) Mention de la délivrance du brevet :
**13.06.84 Bulletin 84/24**

(84) Etats contractants désignés :
**BE CH DE GB IT LI LU NL**

(56) Documents cités :
**FR-A- 2 250 712
FR-A- 2 350 303
US-A- 3 247 106**

(73) Titulaire : **INSTITUT DE RECHERCHES HYDROLOGI-
QUES
10, rue Ernest Bichat
F-54000 Nancy (FR)**

(72) Inventeur : **Colin, François
Rue du Fort Ecuelle
F-54770 Bouxières Aux Chênes (FR)**
Inventeur : **D'Ambrosio, Gérard
38 rue Th. Maire
F-57700 Hayange (FR)**

(74) Mandataire : **Puit, Thierry
c/o Centre de Recherches de Pont-à-Mousson B.P. 28
F-54700 Pont-à-Mousson (FR)**

Jouve, 18, rue St-Denis, 75001 Paris, France

**0 056 117**

### Description

La présente invention concerne un procédé de traitement d'un liquide par passage à travers un lit de particules solides, en vue notamment de sa purification.

La présente invention concerne plus particulièrement un procédé de traitement d'un liquide contenant, à l'état dispersé, des particules insolubles par passage à travers un lit de particules solides en vue de séparer les particules insolubles dispersées dans le liquide.

Elle concerne encore plus spécifiquement un procédé pour épurer des eaux huileuses et notamment des eaux contenant des particules huileuses en suspension.

On connaît de nombreux procédés pour épurer les eaux industrielles telles que des eaux huileuses avant leur recyclage ou leur rejet en milieu naturel.

Parmi ces procédés, la filtration par passage à travers un lit de particules solides telles que du sable est largement utilisée en vue d'éliminer des particules insolubles dispersées dans un liquide.

Cette technique présente toutefois des limites à son utilisation en raison notamment de la nécessité d'opérations de lavage (ou régénération) trop fréquentes lorsque le liquide est fortement chargé en particules insolubles ou de l'impossibilité de retenir des particules de très petite taille.

Pour améliorer la retenue des particules de très petite taille, on a proposé d'ajouter en continu dans le liquide à traiter en amont du lit de particules solides un agent floculant (généralement de type polyélectrolyte cationique) ou un réactif coagulent (sels de fer ou d'aluminium) qui agglomère les particules fines et permet leur rétention sur le lit de particules solides.

En variante, on a également proposé de fixer, avant la filtration, sur les particules solides du lit de filtration une substance conférant aux particules une charge positive. A cet effet, on a proposé en particulier des sels d'aluminium (brevet US-A-2 036 258), des polyélectrolytes cationiques (C. Oulman, D. Burns et R. Baumann, Jour. AWWA, 56, 1233-1238) ou des sels de fer (G. Foess et J. Borchardt, Jour. AWWA, 61, 333-338).

On a encore proposé suivant le brevet FR-A-2 250 712 d'épurer les eaux résiduaires formées dans l'industrie textile, du papier ou du cuir ou dans la fabrication des colorants ou azurants optiques par la mise en contact de ces eaux avec un adsorbant se trouvant sous la forne d'un filtre. Cet adsorbant contient un support prétraité avec des agents de précipitations et du charbon actif. Le support peut être une matière plastique synthétique non ionogène, une matière cellulosique, une charge minérale ou un mélange de ces matériaux.

La présente invention vise à améliorer ces différentes techniques en permettant à la fois d'augmenter la vitesse de filtration et la durée des cycles de filtration.

La présente invention vise également à améliorer ces différentes techniques en permettant d'obtenir des liquides plus purs, grâce à l'élimination non seulement des particules insolubles très fines, mais également de certaines impuretés dissoutes.

La présente invention vise enfin à élargir les types de traitement qui peuvent être effectués en permettant notamment d'effectuer des traitements physiques, physico-chimiques ou chimiques.

A cet effet, la présente invention a pour objet un procédé de traitement d'un liquide par passage à travers un lit de particules solides, caractérisé en ce que l'on mélange en milieu liquide un produit floconneux avec les particules solides, préalablement revêtues d'un agent floculant, l'agent floculant étant choisi de façon à floculer le produit floconneux sur les particules solides, puis l'on fait passer le liquide à traiter à travers le lit de particules.

Par produit floconneux, on désigne tout produit présentant une structure floconneuse en présence du liquide à traiter. Il peut s'agir notamment d'une suspension de particules présentant une structure floconneuse en présence du liquide à traiter. Comme exemples de tels produits, on peut citer les suspensions d'hydroxydes métalliques insolubles tels que les hydroxydes de fer ou d'aluminium.

Le produit floconneux peut être introduit dans le lit de particules sous forme d'une suspension dans un liquide, par exemple une suspension d'un hydroxyde de fer ou d'aluminium, ou en variante le produit floconneux peut être formé *in situ* dans le lit de particules.

Le produit floconneux est avantageusement utilisé à raison d'environ 0,2 à 2 kg/m$^3$ de particules solides.

L'agent floculant préalablement fixé sur les particules solides est choisi de façon à permettre la floculation du produit floconneux sur les particules solides du lit de filtration. On utilise généralement un polyélectrolyte ayant la polarité appropriée. Dans le cas où le produit floconneux est une suspension d'un hydroxyde métallique, le polyélectrolyte est un polyélectrolyte anionique.

L'agent floculant peut être fixé sur les particules solides en introduisant une solution de l'agent floculant dans le lit de particules solides. L'agent floculant peut être utilisé à raison d'environ 30 à 300 g/m$^3$ de particules solides.

Les particules solides constituant le lit de filtration peuvent être constituées de tous les matériaux classiquement utilisés pour la filtration et notamment du sable, mais également de l'anthracite, du corindon, du grenat et plus généralement tous les matériaux granulaires de stabilité physique, mécanique et chimique suffisante.

Le mélange du produit floconneux avec les particules solides préalablement revêtues de l'agent

2

floculant peut être réalisé notamment par injection de gaz à la base du lit de particules. Le produit floconneux en excès et le gaz occlus peuvent être éliminés par envoi d'un liquide à la base du lit de particules.

La présente invention a également pour objet une installation pour la mise en œuvre du procédé selon la présente invention, caractérisée en ce qu'elle comprend une cuve comportant au moins un lit de particules solides reposant sur un support perforé, des moyens pour introduire le produit floconneux juste au-dessus du support perforé, des moyens pour effectuer un balayage ascendant de la cuve par un liquide, des moyens pour mélanger le produit floconneux avec les particules solides et des moyens pour faire passer le liquide à traiter de haut en bas à travers le lit de particules solides.

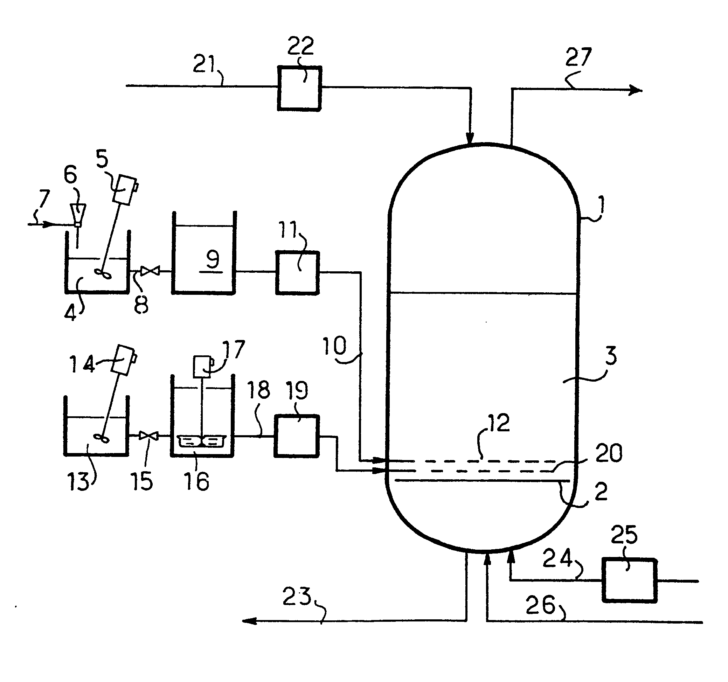

L'invention est exposée ci-après plus en détail à l'aide du dessin annexé représentant un mode de mise en œuvre.

Sur le dessin annexé, la figure unique représente une installation pour la mise en œuvre du procédé selon la présente invention.

Cette installation comprend une cuve 1 ayant une hauteur d'environ 2 mètres munie à sa partie inférieure d'un support perforé 2 constitué par exemple par des buselures ou encore par une couche de gravier. Sur le support 2 repose un lit 3 de particules solides ayant une hauteur d'environ 1 mètre.

L'installation comprend en outre un bac 4 de préparation d'une solution de floculant de type polyélectrolyte. Ce bac est muni d'un agitateur 5. Le floculant pulvérulent est ajouté par un disperseur 6 alimenté en liquide par un conduit 7. Du bac 4, la solution de floculant est envoyée par un conduit 8 dans un bac de stockage 9, et de là par un conduit 10 muni d'une pompe 11 à un tube injecteur 12 disposé dans la cuve 1 à environ 20 cm au-dessus du support 2 de la cuve 1.

L'installation comprend également un bac 13 de préparation d'une suspension de produit floconneux (tel qu'un hydroxyde de fer ou d'aluminium). Ce bac est muni d'un agitateur 14. Du bac 13, la suspension de produit floconneux est envoyée par un conduit 15 à un bac de stockage 16 muni d'un agitateur 17 et de là, par un conduit 18 muni d'une pompe 19, à un tube injecteur 20 disposé dans la cuve 1 à environ 10 cm au-dessus du support 2.

Le liquide à traiter est introduit à la partie supérieure de la cuve 1 par un conduit 21 muni d'une pompe 22. Le liquide traité est évacué à la partie inférieure de la cuve 1 par un conduit 23. De l'air peut être introduit à la partie inférieure de la cuve 1 par un conduit 24 et par l'intermédiaire d'un surpresseur d'air 25. Enfin, un liquide de lavage peut être introduit à la partie inférieure de la cuve par un conduit 26 et est évacué à la partie supérieure de la cuve par un conduit 27.

On donnera ci-après un exemple de mise en œuvre du procédé selon l'invention à l'aide de l'installation représentée sur la figure unique, dans le cas du traitement d'une eau industrielle contenant des particules d'huile en suspension telle qu'une eau rejetée par une usine sidérurgique.

Pour la mise en œuvre du procédé selon l'invention, on utilise une cuve comprenant un lit d'un mètre cube (et de 1 m de hauteur) de particules solides constitué par des particules de sable ayant une taille moyenne de particules de 1,35 mm.

A l'aide de l'installation, on effectue les opérations suivantes :

a) On injecte par le tube injecteur 12 en 10 mn 1 m$^3$ d'une solution aqueuse d'un polyélectrolyte anionique (constituée par exemple par une solution à 0,1 g/l d'un copolymère acrylamide/acrylate).

Simultanément, on injecte à la base de la cuve 1 par le conduit 26 de l'eau à une vitesse apparente de déplacement dans le lit de particules de 2 m/h, de façon à diluer la solution de polyélectrolyte, à contribuer à son mouvement ascendant et à entraîner l'excès de polyélectrolyte.

b) On injecte par le tube injecteur 20 en 10 mn un volume de 0,25 m$^3$ d'une suspension contenant 2,6 g/l d'hydroxyde ferrique. Simultanément, on injecte à la base de la cuve 1 par le conduit 26 de l'eau à une vitesse apparente de déplacement dans le lit de particules de 10 m/h, de façon à diluer la suspension et à contribuer à son mouvement ascendant.

c) On injecte par le conduit 24 de l'air sous une pression de 1,5 bar pendant 30 secondes afin d'homogénéiser le lit de particules et de permettre une fixation régulière des flocons d'hydroxyde sur les particules de sable revêtues du polyélectrolyte anionique.

d) On injecte par le conduit 26 de l'eau pendant 10 secondes pour maintenir le lit de particules solides en expansion, à un volume correspondant à 120 % de son volume initial, afin d'éliminer les flocons d'hydroxyde se trouvant à la surface du lit, ainsi que les bulles d'air occluses résultant de l'opération d'homogénéisation précédente.

e) On amène l'eau à traiter par le conduit 21 et on la fait passer à travers le lit de particules solides ainsi conditionnées, selon un mouvement de haut en bas et on évacue l'eau traitée par le conduit 23. La vitesse de passage de l'eau peut atteindre 40 m$^3$/h.

Cette opération de traitement peut durer plusieurs dizaines d'heures.

Lorsqu'on doit régénérer le lit de filtration c'est-à-dire soit que la qualité de l'eau traitée se soit dégradée, soit que la perte de charge soit devenue trop grande, on introduit, selon une séquence appropriée, de l'eau de lavage par le conduit 26 et de l'air par le conduit 24 pendant 10 mn et on évacue par le conduit 27 les eaux de lavage concentrées en huiles et matières solides. Les eaux de lavage ainsi récupérées correspondent à un volume de l'ordre de 100 fois plus faible que le volume d'eau traitée.

A titre d'exemple, on traite l'eau d'un train de laminoir à chaud en vue de permettre son recyclage. Cette eau contient 21 mg/l d'huiles et 250 mg/l de matières totales en suspension.

Ce traitement est, d'une part, effectué avec un lit de sable non prétraité et, d'autre part, avec un lit de sable prétraité selon l'invention. Les volumes de sable et les caractéristiques de ce sable sont les mêmes.

On détermine dans chaque cas :

— la durée de la phase de filtration, avant que la concentration en huile de l'eau traitée ne dépasse 2 mg/l ou que la perte de charge n'excède 0,4 bar ;

— la concentration en huile de l'eau traitée ;

— la vitesse de filtration techniquement réalisable pour qu'un rendement de séparation notable ou une durée de cycle convenable puissent être atteints. Cette vitesse, exprimée en mètres/heure est numériquement égale au débit d'eau qu'il est possible de traiter par unité de surface de filtre (exprimé en m³ d'eau admise par m² de filtre et par heure).

Les résultats obtenus sont les suivants.

| Paramètres de fonctionnement et performances | Lit de sable classique | Lit de sable préconditionné selon l'invention |
|---|---|---|
| Vitesse de filtration | 10 mètres/heure | 40 mètres/heure |
| Débit d'alimentation | 10 m³/m² de lit/heure | 40 m³/m² de lit/heure |
| Durée de cycle | 10 heures | 20 heures |
| Volume d'eau traitée par cycle | 100 m³ | 800 m³ |
| Concentration moyenne en matières en suspension de l'eau traitée, sur un cycle de filtration | 5,4 mg/l | 0,6 mg/l |
| Concentration moyenne en huiles totales de l'eau traitée, sur un cycle de filtration | 5,6 mg/l | 0,7 mg/l |

Il apparaît au vu de ces résultats que les performances sont nettement meilleures en utilisant le procédé selon l'invention.

Par ailleurs, au cours d'essais de filtration comparatifs consistant à réaliser des cycles successifs, il est apparu un colmatage irréversible du lit de sable classique, se traduisant par une élévation de perte de charge à travers le lit au cours des cycles successifs, tandis que le même inconvénient n'a pas été constaté avec le lit de sable préconditionné, même après dix cycles successifs. Ces résultats sont en accord avec des observations visuelles effectuées sur le sable, celui-ci étant de couleur noire et d'aspect goudronneux dans le premier cas et à peine coloré dans le second cas.

Dans cette application à la filtration des eaux industrielles, les avantages du procédé selon l'invention sont les suivants :

— une vitesse de filtration plus élevée que dans un filtre à sable ordinaire ou dans une installation de coagulation sur filtre. A titre indicatif, les ordres de grandeur sont les suivants :

— vitesse sur filtre à sable avec floculation ou coagulation sur filtre : 3 à 4 mètres/heure (soit un débit de 3 à 4 m³/m² de filtre/heure),

— vitesse de filtration sur filtre à sable courant : 10 à 20 mètres/heure (soit un débit de 10 à 20 m³/m²/heure),

— vitesse de filtration sur filtre à sable préconditionné : 40 à 50 mètres/heure (soit un débit de 40 à 50 m³/m²/heure).

La vitesse de filtration élevée permet un dimensionnement moindre des installations devant traiter un même débit d'eau, donc un coût d'investissement moindre.

— une consommation de réactifs très faible, inférieure à celles qui sont utilisées en floculation ou coagulation sur filtre du fait que l'apport de réactif ne se fait pas en continu, mais en une seule fois en début de cycle. Il en résulte un moindre coût de fonctionnement ;

— une durée des cycles de filtration plus élevée qu'avec les filtres habituels d'où une moindre consommation d'eau et d'air de lavage et une moindre immobilisation de l'installation entre les phases de filtration proprement dites ;

— des performances, en matière de qualité d'eau traitée, accrues par rapport aux filtres à sable normaux ;

— une possibilité de résoudre des problèmes de séparation difficiles qui ne peuvent être résolus correctement par les techniques habituelles (coagulation, floculation, décantation, filtration sur sable, coagulation ou floculation sur filtre) comme c'est le cas pour l'exemple présenté (eaux de laminoirs à chaud). Un cas d'application particulièrement intéressant est celui de suspensions difficiles à floculer ;

— une adaptation simple et peu coûteuse du procédé au cas d'installations de filtration sur sable conventionnelles ;

— la validité du procédé pour séparer des substances insolubles, que celles-ci soient des particules solides ou liquides (huiles).

L'application essentielle de l'invention est la séparation de particules insolubles initialement dispersées dans un liquide. Les particules insolubles peuvent être soit liquides (par exemple huiles), soit solides. La phase liquide peut être soit aqueuse, soit non aqueuse.

Il faut remarquer que le procédé peut être utilisé pour satisfaire à d'autres besoins, dans la mesure où la phase solide floconneuse additionnelle introduite dans la masse du lit filtrant lors de l'opération de préconditionnement est susceptible de réactivité physique, physico-chimique ou chimique vis-à-vis de certains constituants de la phase liquide. C'est ainsi que, par exemple, dans le cas du traitement des eaux huileuses, il est possible qu'une fraction des huiles dissoutes se trouve adsorbée par le précipité d'hydroxyde de fer utilisé.

Le procédé peut donc être appliqué pour erfectuer une réaction entre une phase liquide et une phase solide ayant une structure floconneuse introduite ou créée *in situ* dans le lit filtrant constitué par un empilement de particules solides. Parmi les applications de ce type, on peut citer la fixation d'ions contenus dans une phase liquide aqueuse (phénomène d'adsorption, échange d'ions), et la fixation de molécules organiques dissoutes dans la phase liquide. Un domaine d'application privilégié de cette technique est l'épuration d'eaux contenant des micropolluants (polluants présents à faible concentration mais néanmoins très dangereux du fait de leur toxicité et de leur tendance à se concentrer dans les chaînes trophiques et alimentaires) tels que les métaux lourds et les pesticides (grâce aux propriétés adsorbantes ou fixatrices des précipités d'hydroxydes métalliques).

Compte tenu de ce qui précède, les domaines d'application sont extrêmement vastes. A titre d'exemple, on peut citer :

— l'épuration des eaux polluées en vue de leur rejet au milieu naturel ou leur réutilisation,

— le traitement des eaux de surface en vue de la préparation d'eaux d'alimentation domestique ou industrielle,

— le traitement de phases liquides au niveau même des procédés de fabrication industriels (industries chimiques, alimentaires, etc.), en vue de purifier la phase liquide ou de récupérer la phase insoluble dispersée.


## Revendications

1. Procédé de traitement d'un liquide, contenant à l'état dispersé des particules insolubles, par passage à travers un lit de particules solides, caractérisé en ce que l'on mélange en milieu liquide un produit floconneux avec les particules solides, préalablement revêtues d'un agent floculant, l'agent floculant étant choisi de façon à floculer le produit floconneux sur les particules solides, puis l'on fait passer le liquide à traiter à travers le lit de particules.

2. Procédé selon la revendication 1, caractérisé en ce que le produit floconneux est introduit dans le lit de particules sous forme d'une suspension dans un liquide.

3. Procédé selon la revendication 1, caractérisé en ce que le produit floconneux est formé *in situ* dans le lit de particules.

4. Procédé suivant la revendication 1, caractérisé en ce que les particules solides constituant le lit de filtration sont revêtues d'un agent floculant par passage d'une solution de celui-ci à travers le lit de particules solides, l'agent floculant étant un polyélectrolyte anionique.

5. Procédé selon la revendication 1, caractérisé en ce que le mélange du produit floconneux avec les particules solides est réalisé par injection de gaz à la base du lit de particules et que l'on élimine le produit floconneux en excès et le gaz occlus par envoi d'un liquide à la base du lit de particules.

6. Installation pour la mise en œuvre d'un procédé selon l'une quelconque des revendications précédentes, caractérisée en ce qu'elle comprend une cuve (1) comportant au moins un lit (3) de particules solides reposant sur un support perforé (2), des moyens pour introduire les produits floconneux juste au-dessus du support (2), des moyens pour effectuer un balayage ascendant de la cuve par un liquide, des moyens pour mélanger le produit floconneux avec les particules solides constitués par une injection de gaz à la base du lit de particules et des moyens pour faire passer le liquide à traiter de haut en bas à travers le lit (3) de particules solides.

7. Installation selon la revendication 6, caractérisée en ce qu'elle comprend en outre des moyens pour introduire une solution d'agent floculant juste au-dessus du support (2).


## Claims

1. Method for the treatment of a liquid containing insoluble particles in the dispersed state, by passing through a bed of solid particles, characterised in that one mixes in a liquid medium a flocculent product with the solid particles, previously coated with a Flocculating agent, the Flocculating agent being chosen in order to flocculate the flocculent product on the solid particles, then the liquid to be treated is passed through the bed of particles.

2. Method according to claim 1, characterised in that the flocculent product is introduced into the bed of particles in the form of a suspension in a liquid.

3. Method according to claim 1, characterised in that the flocculent product is formed *in situ* in the bed of particles.

4. Method according to claim 1, characterised in that the solid particles constituting the filtration bed are coated with a Flocculating agent by passing a solution of the latter through the bed of solid particles, the Flocculating agent being an anionic polyelectrolyte.

5. Method according to claim 1, characterised in that mixing of the flocculent product with the solid particles is achieved by injecting gas into the base of the bed of particles and that the excess flocculent product and the occluded gas are eliminated by sending a liquid into the base of the bed of particles.

6. Installation for carrying out a method according to any of the preceding claims, characterised in that it comprises a vat (1) comprising at least one bed (3) of solid particles resting on aperforated support (2), means for introducing the flocculent product just above the support (2), means for carrying out ascending scavenging of the vat by a liquid, means for mixing the flocculent product with the solid particles constituted by an injection of gas into the base of the bed of particles and means for passing the liquid to be treated from top to bottom through the bed (3) of solid particles.

7. Installation according to claim 6, characterised in that it also comprises means for introducing a solution of Flocculating agent just above the support (2).

**Ansprüche**

1. Verfahren zum Behandeln einer Flüssigkeit, in der nicht lösliche Teilchen dispergiert sind, bei dem die Flüssigkeit durch ein Bett aus festen Teilchen durchgeführt wird, dadurch gekennzeichnet, daß die vorher mit einem Flockungsmittel beschichteten festen Teilchen in einer Flüssigkeit mit einem flockigen Mittel vermischt werden, das Flockungsmittel so gewählt wird, daß das flockige Mittel auf den festen Teilchen ausflockt und die zu behandelnde Flüssigkeit durch das Teilchenbett durchgeführt wird.

2. Verfahren nach Anspruch 1, dadurch gekennzeichnet, daß das flockige Mittel als Suspension in einer Flüssigkeit in das Teilchenbett eingeführt wird.

3. Verfahren nach Anspruch 1, dadurch gekennzeichnet, daß das flockige Mittel *in situ* im Teilchenbett gebildet wird.

4. Verfahren nach Anspruch 1, dadurch gekennzeichnet, daß die das Filterbett bildenden festen Teilchen durch das Durchführen einer Lösung des Flockungsmittels durch das Bett aus festen Teilchen mit dem Flockungsmittel beschichtet werden, und daß das Flockungsmittel ein anionischer Polyelektrolyt ist.

5. Verfahren nach Anspruch 1, dadurch gekennzeichnet, daß die Mischung des flockigen Mittels mit den festen Teilen durch Begasung der Unterfläche des Teilchenbetts erzeugt wird und daß der Überschuß des flockigen Mittels und des eingeschlossenen Gases durch Beschickung der Unterfläche des Teilchenbettes mit einer Flüssigkeit entfernt wird.

6. Einrichtung zur Durchführung des Verfahrens nach einem der vorstehenden Ansprüche, gekennzeichnet durch einen Tank (1), der mindestens ein Bett (3) aus festen Teilchen aufweist, das auf einem perforierten Träger (2) ruht, Vorrichtungen zum Einführen der flockigen Mittel dicht unterhalb des Trägers (2), Vorrichtungen zum Aufwärts-Spülen des Tanks mit einer Flüssigkeit, Vorrichtungen zum Mischen des flockigen Mittels mit den festen Teilchen durch Begasung der Unterfläche des Teilchenbetts und Vorrichtungen zum Durchführen der zu behandelnden Flüssigkeit von oben nach unten durch das Bett (3) aus festen Teilchen.

7. Einrichtung nach Anspruch 6, dadurch gekennzeichnet, daß sie außerdem Mittel zum Einführen einer Flockungsmittellösung dicht unterhalb des Trägers (2) aufweist.